# EUROPEAN PATENT APPLICATION

(11) **EP 3 192 642 A1**
(43) Date of publication of application: **19.07.2017**
(21) Application number: 16195964.8
(22) Date of filing: 27.10.2016
(51) Int. Cl.: B29C 63/00, B29C 63/20, B29C 63/34, F16L 59/14, F24F 7/04, B29K 67/00

(54) **METHOD FOR PRODUCING A TUBULAR INSULATOR WITH A COATED INSIDE SURFACE AND A TUBULAR INSULATOR PRODUCED BY THE METHOD**

(30) Priority: 15.01.2016 FI 20165022
(71) Applicant: Paroc Group Oy, 00180 Helsinki (FI)
(72) Inventor: Matikainen, Mr. Jani, 53400 Lappeenranta (FI); SKIPPARI, Sami, 53500 Lappeenranta (FI); Gluszak, Malgorzata, 62-200 Poland Gniezno (PL)
(74) Representative: Sole, Timo

(57) **Abstract**

The invention relates to a method for producing a tubular insulator with a coated inside surface, in which method a tubular insulator (1) is initially produced. In a method according to the invention, an inner coating (5) is prefabricated in a sock-like shape and inserted in the tubular insulator (1); overpressure is created within the inner coating (5) to press the inner coating against the inside surface (4) of the tubular insulator (1); the inner coating (5) is attached by heat to the inside surface (4) of the tubular insulator (1) and is then allowed to cool. The invention also relates to a tubular insulator with a coated inside surface produced by the method.

## Description

The present invention relates to a method according to the preamble of claim 1 for producing a tubular insulator with a coated inside surface, in which method a tubular insulator is initially produced. The invention also relates to a tubular insulator produced by the method.

A method for producing tubular insulators with a coated inside surface is prior known from the utility model registration FI10164 of the applicant of the present application. In this, two halves of a pipe insulation section are initially produced, for example, by cutting a cylindrical pipe insulation section longitudinally into two halves, and the halves are then separately coated on their inside surface.

The object of the present invention to provide a relatively simple method for coating the inside surface of tubular insulators. In order to achieve this object, a method according to the invention for producing a tubular insulator with a coated inside surface, in which method a tubular insulator is initially produced, in which method an inner coating is prefabricated in a sock-like shape and inserted in the tubular insulator, overpressure is created within the inner coating to press the inner coating against the inside surface of the tubular insulator, and the inner coating is attached by heat to the inside surface of the tubular insulator and allowed to cool, is characterized in that, in the method, the inner coating is provided on its outside surface with a polyethylene membrane or PET membrane, which melts under the influence of heat and attaches to the inside surface of the tubular insulator.

Preferably, in the method, cool air is used for cooling the inner coating. As the heat source can be used, for example, hot air to be blown inside the sock-like inner coating for attaching the inner coating to the inside surface of the tubular insulator. It is conceivable that microwave heating can also be used for attaching the inner coating to the inside surface of the tubular insulator. In the method, fibreglass, rubber, plastic, aluminium or other suitable material is used as the inner coating material.

The tubular insulator is preferably coated also on its outside surface before or after coating the inside.

When using a tubular insulator produced according to the invention for forming ventilation ducts, for the inside surface is achieved a uniform tight coating, which efficiently prevents fibres from entering the inside of the ventilation duct. When using a tubular insulator produced according to the invention for insulating various existing pipes, the tubular insulator can be split longitudinally into two or more portions to facilitate installation around the pipe to be insulated. In this case, the eventual slight penetration of fibres via the splitting seam against the surface of the pipe to be insulated does not cause problems. Tubular insulators coated on the inside are used for insulating pipes for corrosion prevention purposes in certain specific sites.

In the following, the invention is described in more detail by means of the accompanying drawings, in which:
- Fig.1: shows schematically an example of a tubular insulator to be used in a method according to the invention, and
- Fig. 2: shows schematically one embodiment of an inner coating used in a method according to the invention in a folded state.

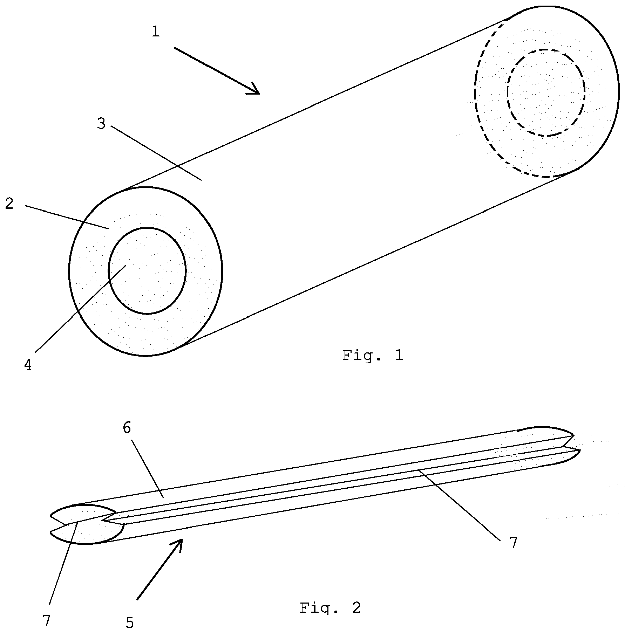

Fig. 1 shows a tubular insulator 1 having a cylindrical insulating layer 2 of mineral wool with an inside surface 4 and an outside surface 3. Such a tubular insulator can be produced in many ways known per se as a uniform pipe insulating section, for example, by extruding in a mould or by rolling from a mineral wool mat. Finally, the insulator produced in a cylindrical shape is cured. A tubular insulator can also be formed from two or more tubular insulator portions, which are connected to each other in order to provide a uniform cylindrical tubular insulator. The portions can be cured before curing or only after the connecting. Once the tubular insulator has been coated on its inside surface in a manner according to the invention, it can, as needed, be split longitudinally into two or more portions.

Fig. 2 shows the flexible coating material 5 forming the inner coating as folded into a sock-like shape, which is to be introduced into the inner space of the tubular insulator 1. The outside surface 6 of the coating material 5 is preferably provided with a polyethylene membrane or PET membrane, which melts under the influence of heat.

The coating material 5 of Fig. 2 is folded together by forming pleats 7 in it. As thus folded, it can be introduced into the cylindrical inner space of the tubular insulator 1, where it can be brought against the inside surface 4 of the insulator 1, for example, by blowing compressed air inside the sock formed by the coating material 5. For this purpose, in the ends of the tubular insulator 1 are preferably arranged cover members (not shown), of which the cover member in one end has compressed air feeding members and another cover member in the opposite end has valve members, by means of which the flow of the compressed air through the sock can be adjusted. When the sock has, using cool compressed air, been initially brought tightly against the inside surface 4 of the insulator, heating of the sock can be started, for example, by introducing hot air into it, which causes the membrane material or adhesive on the outside surface of the sock to melt and to adhere to the inside surface of the insulator, while the sock remains tightly against the inside surface 4. Thereafter, into the sock is preferably led once again cool air, which cools the melted substance on the outside surface of the sock, attaching the sock in place against the inside surface 4. Thereafter, the end covers are removed and the tubular insulator is taken for further treatment, for example, to be packed for transportation or, as needed, for the coating treatment of its outside surface 3. The outside surface can be pre-coated already before producing the inner coating or it can remain without coating.

Instead of hot air, it is conceivable to melt the substance providing adhesion on the outside surface of the sock, for example, using microwave radiation, wherein inside the sock can constantly be fed compressed air at the substantially same temperature.

A solution according to the invention enables the coating of the inside of an insulator in a tubular shape in a relatively simple and fast manner.

The front surfaces of the tubular insulator can, as needed, be separately coated in order to assure that fibres cannot enter the inner space of the insulator. Preferably, the front surfaces can be pre-coated to extend partially within the tubular insulator on top of the inside surface 4, wherein the inner coating is made to extend on top of said introduced section of the front surface coating, forming a tight, uniform coating to the entire inside surface and the front surface area of the tubular insulator. To the front surfaces can be arranged, as needed, tongue-and-groove joint parts in order to make more reliable the connection of tubular insulators to be consecutively connected to each other.

## Claims

1. A method for producing a tubular insulator with a coated inside surface, in which method a tubular insulator (1) is initially produced, in which method an inner coating (5) is prefabricated in a sock-like shape and inserted in the tubular insulator (1), overpressure is created within the inner coating (5) to press the inner coating against the inside surface (4) of the tubular insulator (1), and the inner coating (5) is attached by heat to the inside surface (4) of the tubular insulator (1) and allowed to cool, **characterized in that**, in the method, the inner coating (5) is provided on its outside surface (6) with a polyethylene membrane or PET membrane, which melts under the influence of heat and attaches to the inside surface of the tubular insulator.

2. A method according to claim 1, **characterized in that**, in the method, cool air is used for cooling of the inner coating (5).

3. A method according to any one of claims 1 - 2, **characterized in that**, in the method, hot air to be blown inside the sock-like inner coating (5) is used for attaching the inner coating to the inside surface (4) of the tubular insulator (1).

4. A method according to any one of claims 1 - 2, **characterized in that**, in the method, microwave heating is used for attaching the inner coating (5) to the inside surface (4) of the tubular insulator (1).

5. A method according to any one of the preceding claims, **characterized in that**, in the method, fibreglass, rubber, plastic, aluminium or other suitable material is used as the inner coating material (5).

6. A method according to any one of the preceding claims, **characterized in that**, in the method, the tubular insulator (1) is coated also on its outside surface (3) before or after coating of the inside.

7. A method according to any one of the preceding claims, **characterized in that**, in the method, after coating of the inside, the tubular insulator is split longitudinally into two or more portions.

8. A tubular insulator produced by a method according to any one of the preceding claims.
